# EUROPÄISCHE PATENTANMELDUNG

(11) **EP 4 300 790 A1**
(43) Veröffentlichungstag der Anmeldung: **03.01.2024**
(21) Anmeldenummer: 23177957.0
(22) Anmeldetag: 07.06.2023
(51) Int. Cl.: H02K 7/14, H02K 11/33, H02K 17/16, H02K 7/116

(54) **ELEKTRISCHES ANTRIEBSSYSTEM FÜR EIN SCHIENENFAHRZEUG**

(30) Priorität: 30.06.2022 DE 102022206672
(71) Anmelder: Siemens Mobility GmbH, 81739 München (DE)
(72) Erfinder: Adam, Christoph, 90411 Nürnberg (DE)
(74) Vertreter: Siemens Patent Attorneys

(57) **Zusammenfassung**

Die vorliegende Erfindung betrifft ein elektrisches Antriebssystem (10) für ein Fahrzeug, insbesondere für ein Schienenfahrzeug, aufweisend wenigstens eine elektrische Maschine (12), die eine Asynchronmaschine umfasst, wobei die elektrische Maschine (12) von einem Umrichter (14) versorgt wird, und durch die zumindest ein Antriebsrad des Fahrzeugs antreibbar ist, dadurch gekennzeichnet, dass die elektrische Maschine (12) eine Lochzahl in einem Bereich von 1 bis 3 aufweist, und dass die elektrische Maschine (12) von einem Umrichter (14) versorgt wird, der Bandabstand in einem Bereich von ≥ 1,3 eV aufweist.

## Beschreibung

Die vorliegende Erfindung betrifft ein elektrisches Antriebssystem. Die vorliegende Erfindung betrifft insbesondere ein elektrisches Antriebssystem, welches einen niedrigen Energieverbrauch zeigt.

Elektrische Maschinen sind als Generatoren und/oder elektrische Motoren weit bekannt. Die Vorteile von Permanentmagnet-Synchronmotoren (PSM) liegen dabei in den vergleichsweise geringen Rotorverlusten und damit hohen Wirkungsgraden. Darüber hinaus sind Asynchronmotoren und Reluktanzmotoren bekannt, welche bei der Leistungsentfaltung weniger effektiv sind, jedoch insbesondere im Teillastbetrieb oder bei lastlosen Rollphasen geringe Verluste zeigen.

Asynchronmotoren für Bahnantriebe werden häufig so ausgelegt, dass die maximale Umrichterausgangsspannung bei möglichst niedriger Drehzahl erreicht wird, somit eine steile U-f-Kennlinie erreicht wird. Ein übliches Auslegungskriterium kann darin gesehen werden, die Motorcharakteristik so zu wählen, dass die minimale Kippmomentreserve gerade so noch nicht unterschritten wird. Die Vorteile solcher Motorauslegungen sind beispielsweise geringe Motorströme insbesondere im Anfahrbereich und niedrige Zusatzverluste infolge der Umrichtertaktung. Gegebenenfalls kann die Umrichtertaktfrequenz abgesenkt werden, ohne die zulässigen Motorverluste zu überschreiten.

Durch beide obigen Punkte kann die Halbleiterfläche im Umrichter gegenüber einem Motor mit einer steilen U-f-Kennlinie reduziert werden. Ferner kann ein geringes Stoßkurzschlussmomente im Falle eines Umrichterkurzschlusses gezeigt werden.

Die aus dem Stand der Technik bekannten Lösungen können jedoch noch weiteres Verbesserungspotential bieten.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung, eine Lösung bereitzustellen, durch welche eine gute Energieeffizienz möglich wird.

Die Lösung der Aufgabe erfolgt erfindungsgemäß zumindest zum Teil durch ein elektrisches Antriebssystem mit den Merkmalen des Anspruchs 1. Die Lösung der Aufgabe erfolgt erfindungsgemäß ferner zumindest zum Teil durch einen Antriebsstrang mit den Merkmalen des Anspruchs 8 sowie durch ein Fahrzeug mit den Merkmalen des Anspruchs 9. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Beschrieben wird ein elektrisches Antriebssystem für ein Fahrzeug, insbesondere für ein Schienenfahrzeug, aufweisend wenigstens eine elektrische Maschine, die eine Asynchronmaschine umfasst, wobei die elektrische Maschine von einem Umrichter versorgt wird, und durch die zumindest ein Antriebsrad des Fahrzeugs antreibbar ist, wobei die elektrische Maschine eine Lochzahl in einem Bereich von 1 bis 3 aufweist, und wobei die elektrische Maschine von einem Umrichter versorgt wird, der einen Bandabstand in einem Bereich von ≥ 1,3 eV aufweist.

Eine derartige Ausgestaltung erlaubt auf besonders vorteilhafte Weise eine Möglichkeit, durch welche ein energiearmer Betrieb der elektrischen Maschine möglich wird.

Erfindungsgemäß vorgeschlagen wird somit ein elektrisches Antriebssystem für ein Fahrzeug, wie insbesondere für ein Schienenfahrzeug, welches auch als Bahnfahrzeug bezeichnet werden kann. Als wenigstens eine elektrische Maschine umfasst das elektrische Antriebssystem eine Asynchronmaschine. Diese zeichnet sich etwa dadurch aus, dass sie einen einfachen und robusten Aufbau, eine große Betriebssicherheit und einen geringen Aufwand für Wartung und Pflege zeigt.

Dabei ist es vorgesehen, dass die elektrische Maschine eine Lochzahl in einem Bereich von 1 bis 3 aufweist. Besonders bevorzugt kann die elektrische Maschine eine Lochzahl von 3 aufweisen. Dabei wird unter einer Lochzahl in an sich bekannter Weise im Sinne der Erfindung die Anzahl der Nuten pro Polzahl und Strang beziehungsweise Wicklung verstanden.

Durch diese Ausgestaltung kann es insbesondere ermöglicht werden, dass die Windungszahl abgesenkt werden kann, indem die Anzahl der Ständernuten gegenüber aus dem Stand der Technik bekannten Lösungen reduziert wird. Im Detail reduziert sich die spannungshaltende Windungszahl, ohne dass die Spulenwindungszahl oder die Zahl der parallelen Wicklungszweige verändert werden müssten.

Darüber hinaus ist es bekannt, dass eine elektrische Maschine, wie hier im Detail die Asynchronmaschine, von einem auch als Umrichter benannten Pulswechselrichter versorgt wird. Dabei ist es möglich und in vielen Fällen bevorzugt, dass ein Umrichter auch mehrere elektrische Maschinen versorgen kann. Beispielsweise kann ein Umrichter zwei oder vier Asynchronmaschinen versorgen.

Erfindungsgemäß ist es vorgesehen, dass die elektrische Maschine von einem Umrichter versorgt wird, dessen Bandabstand, beziehungsweise der Bandabstand seines Halbleiters, in einem Bereich von ≥ 1,3 eV, beispielsweise ≥ 1,8 eV, bevorzugt ≥ 2,2 eV, liegt. Dies kann beispielsweise problemlos umsetzbar sein durch die Auswahl seiner Bauform, insbesondere durch die Auswahl seines Halbleiters.

In anderen Worten wird es somit gemäß der vorliegenden Erfindung vorgeschlagen, dass eine Kombination einer sehr geringen Lochzahl der elektrischen Maschine verwendet wird zusammen mit einem definierten Bandabstand des Umrichters, der auch als Pulswechselrichter bezeichnet werden kann.

Dadurch ergeben sich gegenüber den Lösungen aus dem Stand der Technik signifikante Vorteile.

Die vorbeschriebene Ausgestaltung, insbesondere die Auswahl der kleinen Lochzahl, wodurch die Ständernutzahl des Motors möglichst klein gewählt wird, ermöglicht das Ausbilden einer flachen U-f-Kennlinie. Durch die flache U-f-Kennlinie lässt sich der Motor im mittleren bis hohen Drehzahlbereich Verlustarm ansteuern. Es kann ein hoher magnetischer Fluss unter Volllast und ein geringer magnetischer Fluss im Teillastbereich ermöglicht werden. Dies erlaubt einen besonders energiearmen Betrieb.

Ein weiterer Vorteil der niedrigen Ständernutzahl ist, dass eine für die höhere Spannungssteilheit verbreitete Nutisolierung anteilig weniger der Nutfläche einnimmt. Im Detail ist die Spannungssteilheit der Umrichterpulse eines für ein erfindungsgemäßes Antriebssystems verwendeten Umrichters, insbesondere eines Siliziumcarbid-Umrichters, höher als bei einem Umrichter gemäß dem Stand der Technik, etwa bei einem Standard-Silizium-Umrichter. Da die höhere Spannungssteilheit die Isolierung stärker belastet, kann die Isolierung bevorzugt verstärkt werden. Häufig wird die Verstärkung des Isoliersystems durch eine vergleichsweise dicke Nutisolierung realisiert. Werden die Nuten im Vergleich zu Systemen aus dem Stand der Technik verbreitert, benötigt die Isolierung anteilig weniger Bauraum. Dadurch kann der Kupferfüllfaktor erhöht und die Stromwärmeverluste in der Ständerwicklung reduziert werden.

Grundsätzlich kann es von Vorteil sein, wenn die Breite der Ständernuten angepasst ist an die Lochzahl. Wird die Lochzahl beispielsweise reduziert, werden die die Ständernuten im Wesentlichen um das Verhältnis der Lochzahlen verbreitert, so dass der Gesamtquerschnitt der Ständernuten im Wesentlichen unverändert bleibt. Bei einer rein beispielhaften und lediglich erläuternden Ausgestaltung wird eine elektrische Maschine mit einer Lochzahl von 4 und einer Ständernutbreite von 10 mm erfindungsgemäß auf eine Lochzahl von 3 geändert. Dabei wird die Nutbreite auf 10mm*4/3=13,3 mm erhöht.

Darüber hinaus ergibt sich erfindungsgemäß der weitere Vorteil, wonach eine Vergrößerung und ein Mehraufwand durch parallele Wicklungszweige und parallele Leiter bei der Schaltung der Ständerwicklung verhindert werden können.

Ferner können, wie dies bei alternativen Lösungen oftmals auftritt, höhere Verluste infolge von Stromverdrängung und größerer Wicklungsausladung vermeiden werden. Dies kann sich wiederum positiv auf die Effizienz des hier beschriebenen elektrischen Antriebssystems auswirken.

Bevorzugt kann der Umrichter eine Taktfrequenz in einem Bereich von größer oder gleich 2000 Hz, beispielsweise größer oder gleich 2500 Hz, etwa größer oder gleich 4000 Hz ermöglichen. Der Einsatz von Umrichtern mit einer derart hohen Taktfrequenz bei einem elektrischen Antriebssystem gemäß der vorliegenden Erfindung führt dazu, dass Motoren mit einer flachen U-f-Kennlinie Vorteile im Energieverbrauch haben. Ferner kann auch bei hohen Grundfrequenzen eine hohe Pulszahl realisiert werden. Dadurch kann auch bei hohen Drehzahlen die Motorspannung noch oberschwingungsarm gestellt werden und der Motor mit einer verlustoptimalen Spannung versorgt werden. Auch dies kann sich vorteilhaft auf die Entwärmung auswirken.

Dabei zeigen insbesondere Umrichter basierend auf Siliziumcarbid, Galiumnitrid oder Diamant, vorzugsweise Siliziumcarbid, als Halbleitermaterial anstatt von Umrichtern auf Basis von Silizium wie aus dem Stand der Technik bekannt, in bevorzugter Weise die vorgenannten Vorteile. Ein weiterer Vorteil der genannten Umrichtertypen ist, dass die Verluste in den Leistungshalbleitern geringer sind als bei Silizium-Umrichtern. Dadurch wir der Wirkungsgrad des Antriebssystems weiter gesteigert.

Durch den Einsatz von hohen Streustegen wird nicht nur das Stoßkurzschlussmoment bei Umrichterkurzschlüssen reduziert, sondern auch die Stäbe des Läuferkäfigs weiter innen im Motor angeordnet. Dadurch werden die Läuferstäbe gegenüber den Oberfeldern infolge der Ständernutzung abgeschirmt und es entstehen weniger Verluste im Läuferkäfig. In dieser Ausgestaltung wird somit das Problem der hohen Stoßkurzschlussmomente dadurch abgemildert, dass die Streustege der Rotornuten möglichst Sättigungsarm ausgeführt werden. Geometrisch wird das bevorzugt durch hohe Streustege und breite Streuschlitze umgesetzt.

Es kann weiterhin bevorzugt sein, dass die Nutzahl des Rotors derart an die Nutzahl des Stators angepasst ist, dass die Nutzahl des Rotors um einen Faktor der Zwei- oder Dreifachen Polzahl geringer ist, als die Nutzahl des Stators. In anderen Worten kann zusätzlich zu einer Anpassung der Nutzahl des Stators beziehungsweise bei einer Anpassung der Ständernutzahl gleichermaßen auch die Nutzahl des Rotors beziehungsweise die Läufernutzahl angepasst werden. Dies um den vorgenannten Faktor, so dass der Abstand zwischen Ständer- und Läufernutzahl gleichbleiben kann. Diese Ausgestaltung ermöglicht es, eine Geräuschanregung durch nutharmonische Luftspaltfelder zu unterbinden. Somit kann insbesondere in dieser Ausgestaltung der Komfort eines mit einem erfindungsgemäßen Antriebssystem ausgestatteten Fahrzeugs besonders hoch sein. Die Akzeptanz des Antriebssystems kann dadurch besonders hoch sein.

Es kann somit vorteilhaft sein, die Läufernutzahl geringer auszuführen als die Ständernutzahl, und dies um einen Faktor, der der 1-3 fachen Polzahl entspricht. Um extrem niedrige Läufernutzahlen zu vermeiden, ist es etwa bei reduzierten Ständernutzahlen auch möglich, die Läufernutzahl höher als die Ständernutzzahl zu wählen. Der Abstand zwischen Ständer- und Läufernutzahl sollte dabei aber weiterhin das ein bis dreifache der Polzahl betragen. Grundsätzlich kann es daher von Vorteil sein, wenn die Nutzahl des Rotors derart an die Nutzahl des Stators angepasst ist, dass die Nutzahl des Rotors um einen Faktor der ein- bis dreifachen Polzahl höher oder niedriger ist als die Nutzahl des Stators.

Hinsichtlich weiterer Vorteile und technischer Merkmale des elektrischen Antriebssystems wird hiermit auf die Beschreibung des Antriebsstrangs, des Fahrzeugs, die Figuren und die Beschreibung der Figuren verwiesen.

Beschrieben wird ferner ein Antriebsstrang für ein Fahrzeug, insbesondere für ein Schienenfahrzeug, wobei der Antriebsstrang ein elektrisches Antriebssystem zum Antreiben eines Rades umfasst, dadurch gekennzeichnet, dass das Antriebssystem ausgestaltet ist, wie vorstehend beschrieben.

Beispielsweise kann der Antriebsstrang in einem Bahnfahrzeug beziehungsweise Schienenfahrzeug angeordnet sein beziehungsweise Teil des Bahnfahrzeugs sein, so dass eine gute Implementierung in bereits bestehend Systeme sowie eine breite Anwendbarkeit gegeben ist. In diesem Fall kann der Antriebsstrang das vorbeschrieben Antriebssystem, ein mit den Motoren verbundenes Getriebe, eine Radsatzwelle und eine Achskupplung zum Übertragen des Antriebsmomentes vom Getriebe auf die Radsatzwelle umfassen.

Die spezifischen Vorteile eines derartigen Antriebsstrangs können insbesondere darin gesehen werden, dass ein Betrieb mit einer besonders vorteilhaften Energieeffizienz möglich wird.

Hinsichtlich weiterer Vorteile und technischer Merkmale des Antriebsstrangs wird hiermit auf die Beschreibung des elektrischen Antriebssystems, des Fahrzeugs, die Figuren und die Beschreibung der Figuren verwiesen.

Beschrieben wird ferner ein Fahrzeug, wobei das Fahrzeug wenigstens eines von einem elektrischen Antriebssystem und einem Antriebsstrang aufweist, wie diese vorstehend beschrieben sind.

Beispielsweise kann das Fahrzeug ein auch Bahnfahrzeug genanntes Schienenfahrzeug sein, da insbesondere für derartige Fahrzeuge entsprechende Antriebsstränge beziehungsweise elektrische Antriebssysteme geeignet sind.

Die vorstehend beschriebenen Vorteile sind auch für ein beschriebenes Fahrzeug einschlägig, so dass ein Betrieb mit einer besonders vorteilhaften Energieeffizienz möglich wird.

Hinsichtlich weiterer Vorteile und technischer Merkmale des Fahrzeugs wird hiermit auf die Beschreibung des elektrischen Antriebssystems, des Antriebsstrangs, die Figuren und die Beschreibung der Figur verwiesen.

Weitere Einzelheiten, Merkmale und Vorteile des Gegenstandes der Erfindung ergeben sich aus den Unteransprüchen sowie aus der nachfolgenden Beschreibung der Figuren. In den Figuren zeigen:
- Fig. 1: eine schematische Ansicht eines elektrischen Antriebssystems gemäß der vorliegenden Erfindung;
- Fig. 2: eine schematische Ansicht eines Rotors und eines Stators mit unterschiedlicher Nutzahl in einer ersten Ausgestaltung mit niedrigerer Läufernutzahl;
- Fig. 3: eine schematische Ansicht eines Rotors und eines Stators mit unterschiedlicher Nutzahl in einer ersten Ausgestaltung mit höherer Läufernutzahl; und
- Fig. 4: einen Antriebsstrang gemäß einer Ausgestaltung der vorliegenden Erfindung.

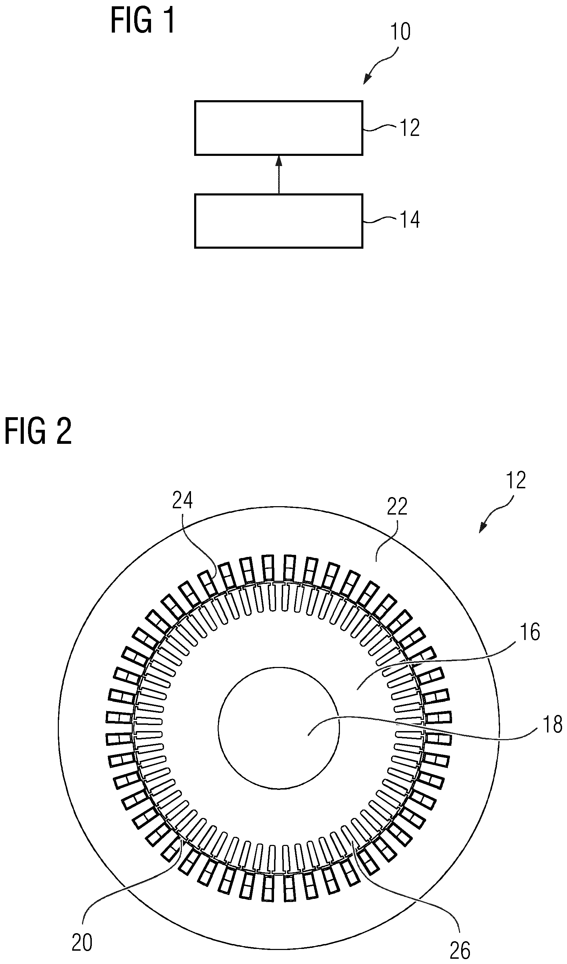

In der Figur 1 ist ein elektrisches Antriebssystem 10 für ein Schienenfahrzeug gezeigt. Das elektrische Antriebssystem 10 umfasst wenigstens eine elektrische Maschine 12, die eine Asynchronmaschine umfasst. Ferner ist gezeigt, dass die elektrische Maschine 12 von einem Umrichter 14 versorgt wird. Die elektrische Maschine 12 weist eine Lochzahl in einem Bereich von 1 bis 3 auf und wird nachfolgend in größerem Detail beschrieben. Der Umrichter 14 weist ferner einen Bandabstand in einem Bereich von ≥ 1,3 eV auf und kann etwa ein SiC-Umrichter sein.

In der Figur 2 ist ein Teil einer elektrischen Maschine 10 gemäß der vorliegenden Erfindung gezeigt. Im Detail ist ein Rotor 16 gezeigt, der im Inneren einen Aufnahmeraum 18 für eine Welle, wie etwa eine Radsatzwelle 32 aufweist, auf welche er beispielsweise aufgeschrumpft sein kann. Der Rotor 16 ist durch einen Luftspalt 20 von einem Stator 22 getrennt. Der Rotor 16 wie auch der Stator 22 können grundsätzlich in an sich bekannter Weise ausgebildet sein.

In der Figur 2 ist insbesondere gezeigt, dass die elektrische Maschine 12 gesamt 60 Ständernuten 24, also Nuten im Stator 22, und 48 Läufernuten 26, also Nuten im Rotor 16, aufweist. In anderen Worten ist es vorgesehen, dass der Stator 22 60 Nuten aufweist und dass der Rotor 22 48 Nuten aufweist. Die Differenz der Läufernuten 26 und der Ständernuten 24 liegt somit bei 12, was dem Kriterium entspricht, dass die Nutzahl des Rotors 16 derart an die Nutzahl des Stators 22 angepasst ist derart, dass die Nutzahl des Rotors 16 um einen Faktor der ein-bis dreifachen Polzahl höher oder niedriger ist, als die Nutzahl des Stators 22, da die elektrische Maschine 10 hier eine Polzahl von 4 aufweist.

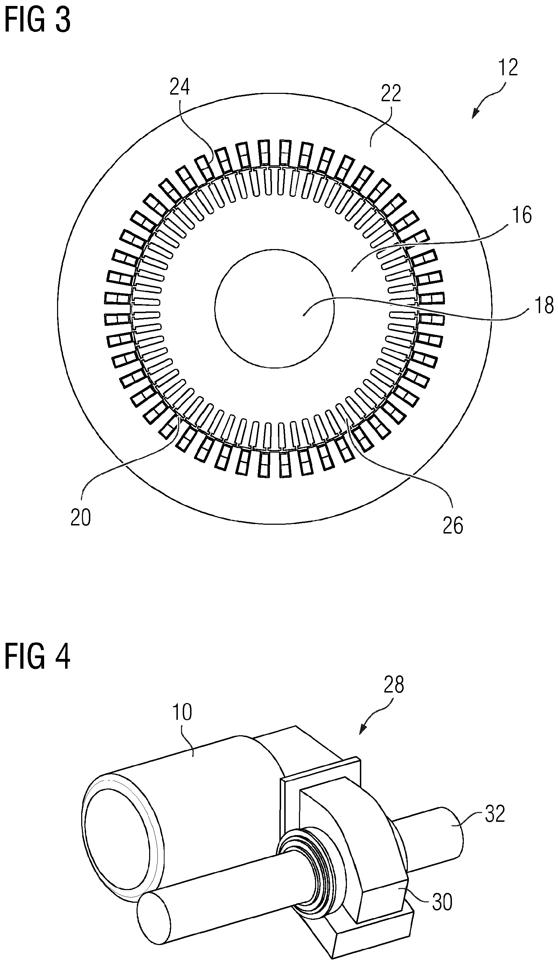

In der Figur 3 ist eine zu der Figur 2 im Wesentlichen entsprechende Ausgestaltung gezeigt, wobei hinsichtlich der Bezugszeichen auf die Figur 2 verweisen wird. Anders als bei der Figur 2 ist es bei der Figur 3 vorgesehen, dass die elektrische Maschine 10 48 Ständernuten 24 und 60 Läufernuten 26 aufweist. In anderen Worten ist es vorgesehen, dass der Stator 22 48 Nuten aufweist und dass der Rotor 16 60 Nuten aufweist. Dies entspricht wiederum dem Kriterium, dass die Nutzahl des Rotors 16 derart an die Nutzahl des Stators 22 angepasst ist derart, dass die Nutzahl des Rotors 16 um einen Faktor der ein-bis dreifachen Polzahl höher oder niedriger ist, als die Nutzahl des Stators 22, da die elektrische Maschine 10 hier eine Polzahl von 4 aufweist.

Figur 4 zeigt einen Antriebsstrang 28 für ein Fahrzeug, insbesondere für ein Schienenfahrzeug, das eine zuvor beschriebene elektrische Maschine 12 mit einem Umrichter 14, gemeinsam gezeigt als elektrisches Antriebssystem 10, aufweist. Das Antriebssystem 10 ist mit einem Getriebe 30 verbunden. Durch das Getriebe 30 verläuft die Radsatzwelle 32, die insbesondere über eine Kupplung mit dem Getriebe 32 wechselwirkt und durch welche Räder des Fahrzeugs antreibbar sind. Entsprechend kann durch die elektrische Maschine 10 eine Radsatzwelle 32 und damit ein Rad insbesondere des Schienenfahrzeugs antreibbar sein.

## Patentansprüche

1. Elektrisches Antriebssystem (10) für ein Fahrzeug, insbesondere für ein Schienenfahrzeug, aufweisend wenigstens eine elektrische Maschine (12), die eine Asynchronmaschine umfasst, wobei die elektrische Maschine (12) von einem Umrichter (14) versorgt wird, und durch die zumindest ein Antriebsrad des Fahrzeugs antreibbar ist, **dadurch gekennzeichnet, dass** die elektrische Maschine (12) eine Lochzahl in einem Bereich von 1 bis 3 aufweist, und dass die elektrische Maschine (12) von einem Umrichter (14) versorgt wird, der einen Bandabstand in einem Bereich von ≥ 1,3 eV aufweist.

2. Elektrisches Antriebssystem (10) nach Anspruch 1, **dadurch gekennzeichnet, dass** die Lochzahl 3 beträgt.

3. Elektrisches Antriebssystem (10) nach Anspruch 1 oder 2, **dadurch gekennzeichnet, dass** der Umrichter (14) eine Taktfrequenz in einem Bereich von größer oder gleich 2000 Hz ermöglicht.

4. Elektrisches Antriebssystem (10) nach einem der Ansprüche 1 bis 3, **dadurch gekennzeichnet, dass** der Umrichter (14) ausgewählt ist aus der Gruppe bestehend aus einem Siliziumcarbid-Umrichter, einem Galiumnitrid-Umrichter und einem Diamant-Umrichter.

5. Elektrisches Antriebssystem (10) nach Anspruch 4, **dadurch gekennzeichnet, dass** der Umrichter (14) einen Siliziumcarbid-Umrichter umfasst.

6. Elektrisches Antriebssystem (10) nach einem der Ansprüche 1 bis 5, **dadurch gekennzeichnet, dass** die Breite der Ständernuten an die Lochzahl angepasst ist.

7. Elektrisches Antriebssystem (10) nach einem der Ansprüche 1 bis 6, **dadurch gekennzeichnet, dass** die Nutzahl des Rotors (16) derart an die Nutzahl des Stators (22) angepasst ist, dass die Nutzahl des Rotors (12) um einen Faktor der ein- bis dreifachen Polzahl höher oder niedriger ist als die Nutzahl des Stators (22) .

8. Antriebsstrang (28) für ein Fahrzeug, insbesondere für ein Schienenfahrzeug, wobei der Antriebsstrang (28) ein elektrisches Antriebssystem (10) zum Antreiben zumindest eines Rades umfasst, **dadurch gekennzeichnet, dass** das Antriebssystem (10) ausgestaltet ist nach einem der Ansprüche 1 bis 7.

9. Fahrzeug, **dadurch gekennzeichnet, dass** das Fahrzeug wenigstens eines von einem elektrischen Antriebssystem (10) nach einem der Ansprüche 1 bis 7 und einem Antriebsstrang (28) nach Anspruch 8 aufweist.

10. Fahrzeug nach Anspruch 9, **dadurch gekennzeichnet, dass** das Fahrzeug ein Schienenfahrzeug ist.
